# EUROPEAN PATENT SPECIFICATION

(11) **EP 0 664 948 B1**
(45) Date of publication and mention of the grant of the patent: **17.09.2003**
(21) Application number: 95200181.6
(22) Date of filing: 26.01.1995
(51) Int. Cl.: A01D 78/10

(54) **A tedding machine**
Heuwerbungsmaschine
Machine de fenaison

(30) Priority: 28.01.1994 NL 9400133
(43) Date of publication of application: 02.08.1995
(60) Divisional application: 97203629.7
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 165 638
- EP-A- 0 385 899
- EP-A- 0 492 620
- WO-A-91/18497
- DE-A- 3 628 605
- DE-U- 9 216 498
- DE-U- 9 315 877
- DE-U- 9 315 879
- FR-A- 2 375 814
- FR-A- 2 663 189
- NL-A- 7 604 451
- US-A- 3 638 977

## Description

The present invention relates to a tedding machine for tedding a crop lying on the ground, such as hay.

In EP-A-0165638 a tedding machine is described intended to be attached to the rear of a tractor and having a single frame bearing six processing devices in the operative position extending in a single row perpendicular to the moving direction of the tractor. The frame can be pivoted upwardly to adapt the width for transport. Particularly since its large working width, complications arise with the transport of this known machine by public road. In accordance with the invention, such complications can be obviated in an advantageous manner when the machine is designed according to the features of claim 1. Such a construction has, among other things, the advantage that the working width of the machine is relatively easily adaptable to the circumstances.

Advantageous embodiments and developments of the invention are specified in the dependent claims.

The invention will now be further explained with reference to the accompanying drawings, in which:
Figure 1 shows a top plan view of a machine according to the invention in a condition where it is coupled to the front and rear hitch mechanism of a tractor;
Figure 2 is a partial view according to arrow II in Figure 1;
Figure 3 is a partial front view of the machine as represented in Figure 1, but here it is in the transport position;
Figure 4 is a top plan view of the machine in a condition where it is coupled to a tractor and in the preferred transport position according to Figure 3;
Figure 5 is a plan view of an alternative embodiment of the invention where the machine is in an operating position, with the transport position being represented by dashed lines;
Figure 6 is a front view according to arrow VI in Figure 5 and represents an operating position of the machine in accordance with Figure 5;
Figure 7 represents the transport position of the machine in a front view according to arrow VI in Figure 5.

Corresponding parts in the drawings are marked by the same reference numbers. Moreover, the invention is by no means limited to the embodiments depicted and described here; these are only intended for illustration of the inventive idea.

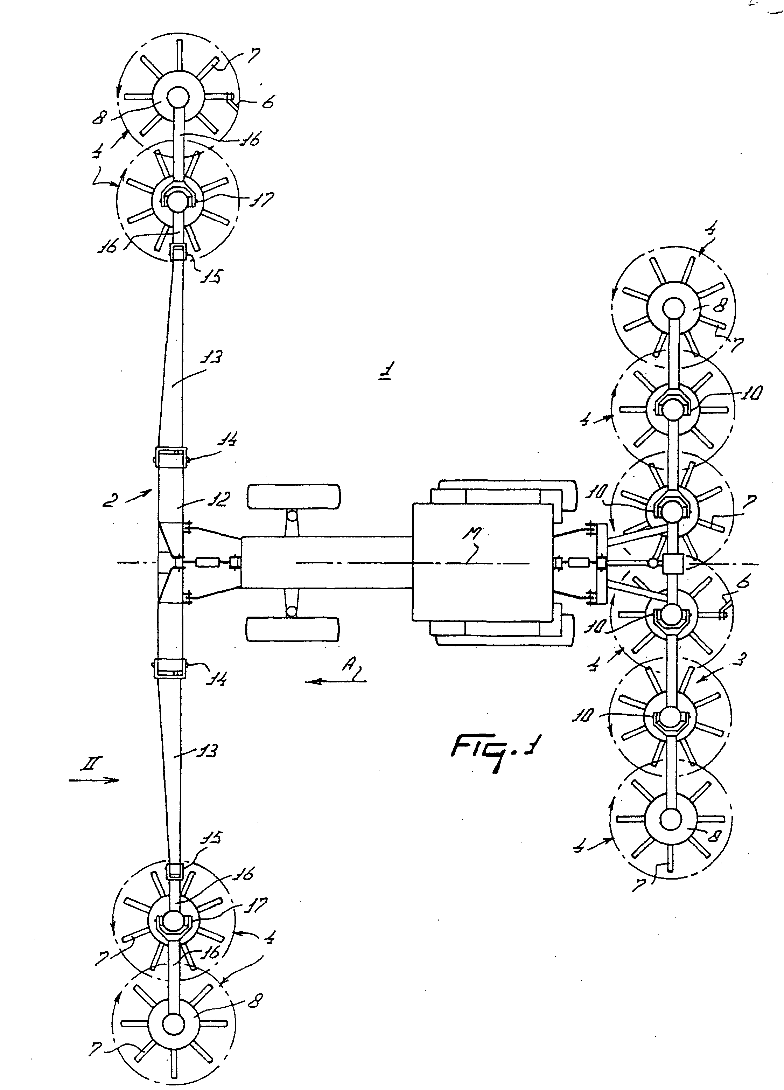

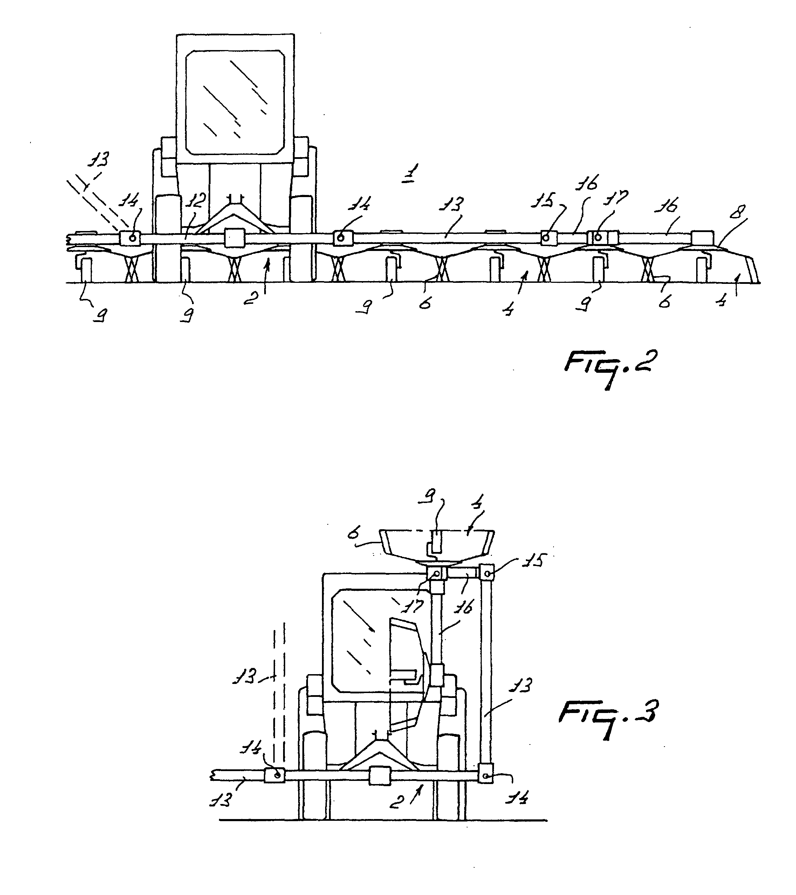

Figure 1 shows a haymaking machine 1 which is suitable for crop-tedding and which comprises a first and a second, i.e. a front and a rear frame 2, 3. The second frame 3 comprises six known per se processing devices 4, each of which operates pairedly in conjunction with a processing device 4 disposed in an adjacent position. Each of the processing devices 4 is rotatable on a drivable, rotary shaft which is substantially extending upwards and is supported by bearings in the frame 2, 3. Each processing device 4 is provided with processing elements 6, such as tines, which make contact with the crop to be tedded. In the preferred embodiment represented in the drawings, the processing devices 4 comprise eight arms 7 to bear such processing elements 6. These arms 7 are supported and kept in position with respect to each other by a cap 8 mounted on the said rotary shaft and covering the central or centre-sided end of an arm 7. Each processing device 4 is supported with respect to the ground by means of a supporting element 9, preferably a wheel, for instance, such as is depicted in Figure 2. Moreover, for the purpose of optimum adjustment to the ground, each of the processing devices 4, though with the exception of the two central ones, is movable on a swivel shaft 10 oriented substantially in the direction of travel A and disposed on the respective processing device's side being the closer to the machine centre line M when mounted in the frame 2, 3. According to the invention, this mounting position is preferably over the upwards extending rotary shaft of a neighbouring processing device 4. The rear frame 3 of the machine is connected to the rear hitch of the tractor through a known per se hook-up trestle. Viewed from above, the frame 3 is connected to the three-point trestle through a trapezial hinge-construction in such a way that the distance between the rear pivots is at a maximum. Such an arrangement ensures that the machine follows the tractor in a stable manner.

The front frame 2 of the machine 1 comprises a central frame part 12 which is in a known manner coupled to the front three-point hitch of the tractor through a three-point trestle provided on this part 12. At a distance corresponding with the largest contour circle of a processing device 4, as measured from the vertical plane imaginable through the centre line M, an intermediate frame part 13 belonging to the front frame 2 is mounted pivotably on a swivel shaft 14 oriented in the direction of travel A. On the end of an intermediate frame part 13, a further frame part 16 provided with a group of one pair of processing devices 4 is mounted pivotably on a swivel shaft 15 being in the direction of travel. Here, the swivel shaft 15 is positioned near, but preferably within the largest contour circle of the relevant processing device 4 of a mentioned pair. The outer one of a mentioned pair of processing devices is, with respect to the inner processing device 4, capable of being moved about a swivel shaft 17 which extends in the direction of travel A and connects two parts of the further frame part 16. Just as the processing devices 4 of the rear machine frame 3, the processing devices of the front machine frame 2 are capable of being driven through connection of the relevant machine part 2 to the drive gear of the tractor, in particular to a front power take-off shaft of it. According to the invention, the power can subsequently be applied to the processing devices 4 either through hydraulic lines with a hydraulic drive or through a centrally disposed gear box with right-angled transmission gear through shaft parts mounted and bearing-supported in the frame 2, 3.

Figure 3 represents schematically a front view of the transport position of the front machine part 2. Here, the intermediate frame part 13 has been swung into a substantially vertical position, a first part of the further frame part 16 extends horizontally, and the processing device 4 attached to the latter is positioned upside down. In the transport position, the outer part of the further frame part 16 has been swung vertically and the outer processing device 4 is positioned between the vertical plane through the centre line M and the intermediate frame part 13. Figure 2 also shows in the form of dashed lines an oblique interim position of the intermediate frame part 13 wherein this part can be fixed. In this position, the processing devices attached to this part have been raised from the ground, for instance, so as to adapt temporarily the working width of the machine to the circumstances in the field or to be able to turn round more smoothly at the headland.

Figure 4 shows a top plan view of the entire machine in transport position. In the transport position the overall width of the machine is 2.95 m, which is less than the statutory (maximum) transport width of 3 m in many countries. The relevant frame parts of the two outermost pairs of processing devices 4 of the rear machine part 3 are at least partly extending upwards. According to the invention, the outermost part of the rear frame 3 can be either extending upwards or upwards and directed towards the vertical plane through the centre line M and, in addition, almost leaning against the other outer processing device 4, swung through 90° or more with respect to the relevant processing device in the outermost position but one.

The front machine part 2 is put into its transport position by means of control elements provided in the machine, such as hydraulic cylinders, by swivelling first the outermost frame part through 90° upwards, then swivelling the adjacent frame part on the shaft 15 also through 90°, and subsequently the intermediate frame part 13 on the shaft 14 through 90°. In the present embodiment, the processing devices each have a diameter of approximately 160 cm and overlap approximately 25 cm. As a result of this, the machine reaches a total working width of 14 m, or 11 m by disengagement of one half of the front machine part, or 8 m by disengagement of the two front machine parts.

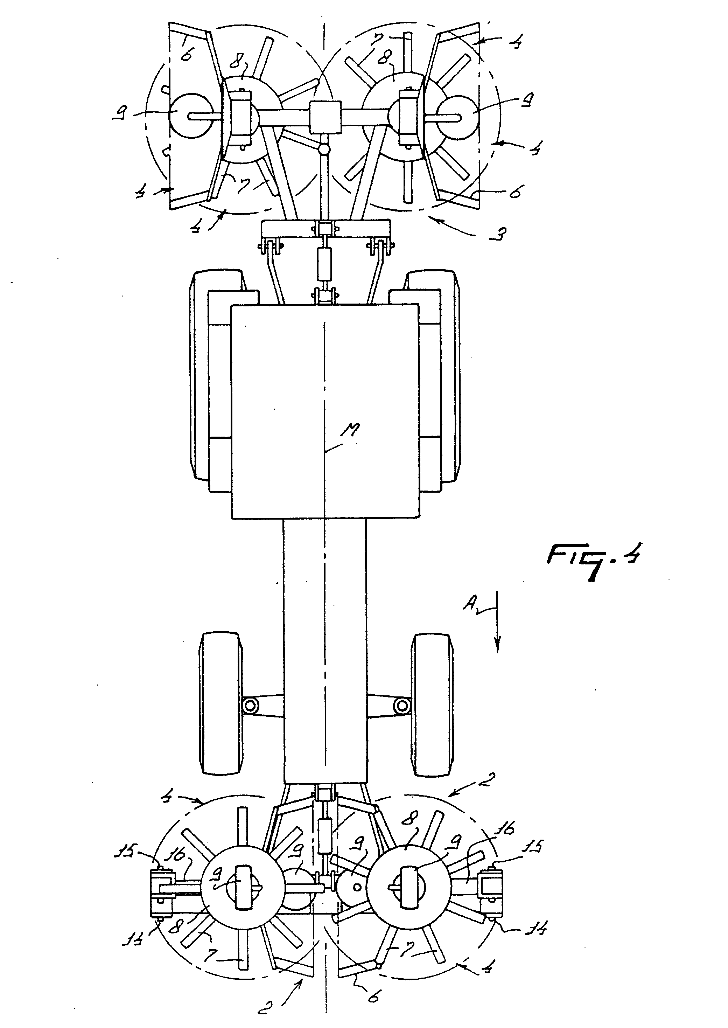

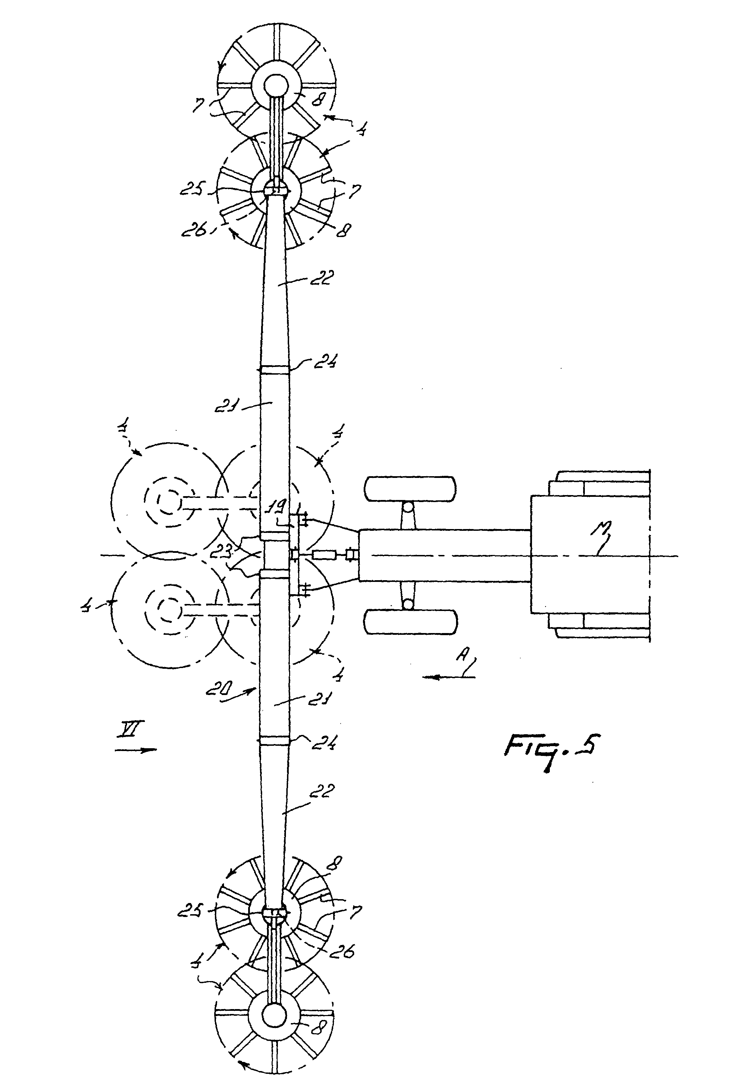

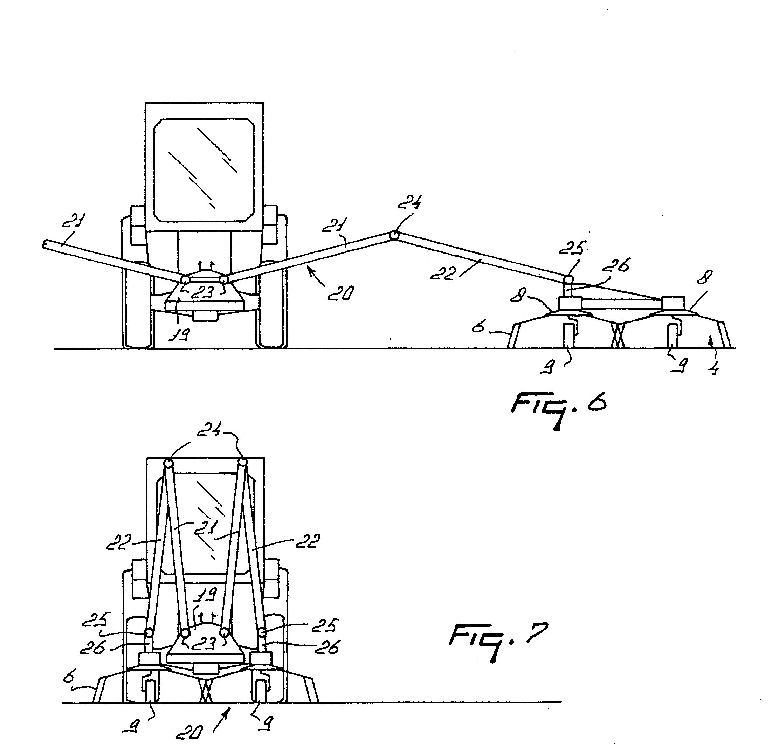

Figures 5 through 7 represent a construction according to an alternative embodiment of the invention for reaching the transport position of tedding machines having a very large width as mentioned hereinbefore. In this embodiment, the front frame part 2 of the machine includes a central frame part 19. On this part, symmetrically disposed with respect to the vertical plane through the centre line M of the machine, there are mounted by means of an arm 20 comprising two parts 21, 22 of essentially the same length which are capable of mutually hinging about a swivel shaft 24 extending in the direction of travel A, two groups of at least two processing devices 4 each, the groups being arranged at a certain distance from each other. The entire arm 20, which is oriented crosswise to the direction of travel A, is capable of pivoting about a swivel shaft 23 at least essentially oriented in the direction of travel A and bearing-supported at a small distance from the vertical plane through the centre line in the central frame part 19. The swivel shafts 23 are preferably disposed within the maximum width of a standard three-point hitch. On the outer end of a frame arm 20 there is provided, capable of pivoting on a swivel shaft 25 oriented essentially in the direction of travel A and on a swivel shaft 26 essentially directed upwards (Figure 6), a group of at least one pair of mutually cooperating (intermeshing) processing devices 4. Just as in the embodiment mentioned hereinbefore, in terms of functioning, the innermost processing device 4 of such a group links up with the outermost processing device 4 of a group belonging to the second frame 3. Capable of operating on each of the frame arms 20 and to be activated from the tractor cab is a control device, by means of which the first part 21 of the frame arm 20 can be swung upwards and the group of processing devices 4 moved in the direction of the centre line M through hinges of the second arm part on the swivel shafts 24 and 25. For this purpose, the supporting elements 9 are preferably designed as swivelling wheels in this embodiment. In the present embodiment, after unlocking the group of outermost processing devices 4 being in their position on a line transverse to the direction of travel A, the group can subsequently be swivelled on the shaft 26 through 90° in forward direction either manually or by using a control element. After such a movement around the upwards directed shaft 26 in the direction of travel. A, the processing devices 4 of a group are in a row on a line in the direction of travel A. Obviously, for transport in the field such a turn is not necessary and it is sufficient to swing the frame arm 20 into upward position and to raise the front hitch of the tractor. Just as in the exemplary embodiment according to Figures 1 through 4, the maximum width for transport of the machine by public roads does not exceed the width of two processing devices whose contour circles overlap and, with that, the transport width of the machine remains less than the maximum transport width amounting to 3 m as is often laid down by law. In the present embodiment, the transport width is 2.95 m.

The invention is not limited to what is described hereinbefore, but it also relates to all details in the drawings. Furthermore, the invention relates to all kinds of alternatives in construction falling indeed under the terms of the accompanying claims.

## Claims

1. A tedding machine for tedding a crop lying on the ground, such as hay, which tedding machine comprises two individual tedding units, one unit attachable to the front hitch mechanism, the other one attachable to the rear hitch mechanism of a tractor, which units are attached to frame parts of a frame that are upwardly pivotable between an operative position and a transport position if attached to a tractor, the tedding units being equipped with drivable rotary processing devices (4) provided with tines (6), whereby the machine comprises a frame (2) provided with two groups of processing devices (4), whereby, in terms of functioning, the processing devices (4) of each group link up with each other, this frame (2) being intended for connection to a front hitch mechanism of a tractor, and whereby the machine comprises a further frame (3) intended for connection to the rear hitch mechanism of the same tractor, this further frame (3) comprising at least one group of processing devices (4) which, in terms of functioning, links up with the groups of processing devices (4) belonging to the other frame (2), so that over the complete working width crop lying on the ground is tedded.

2. A tedding machine according to claim 1, **characterized in that** a group of processing devices (4) is capable of being released from operation by putting the frame part (13, 16, 21, 22) bearing the processing devices (4) into an obliquely upward position.

3. A tedding machine according to one or more of the preceding claims, **characterized in that** a group of processing devices (4) comprises one or more pairs in each case.

4. A tedding machine according to one or more of the preceding claims, **characterized in that** the machine has a working width of approximately 14 m.

5. A tedding machine according to one or more of the preceding claims, **characterized in that** the machine comprises processing devices (4), at least one of which being capable of being positioned upside down for the sake of transport.

6. A tedding machine according to one or more of the preceding claims, **characterized in that** a processing device (4) has eight tine arms (7).

7. A tedding machine according to one or more of the preceding claims, **characterized in that** the total working width amounts to 14m, and 8 m upon disengagement of two groups of processing devices (4).

8. A tedding machine according to one or more of the preceding claims, **characterized in that** the other frame (2) is put into a transport position by raising one or more frame parts (16) being near an outer frame end, then one or more middle frame parts (16) and finally the frame part (13) adjoining the frame part (12) provided with an attaching trestle.

9. A tedding machine according to one or more of the preceding claims, **characterized in that** a processing device (4) is capable of being swung on a vertical (26) and a horizontal shaft (25) to arrive at the transport position.

10. A tedding machine according to one or more of the preceding claims, **characterized in that** on at least one side of the vertical plane through the centre line M, the front frame (2) comprises at least three pivots (23 - 25) oriented in the direction of travel A, with the third of them, as counted from the centre line M, being in the vicinity of a swivel shaft (26) directed essentially upwards.

11. A tedding machine according to claim 10, **characterized in that** the swivel shaft (26) directed essentially upwards is disposed within the largest contour circle of a first processing device (4), as counted from the centre line M of the machine.

12. A tedding machine according to one or more of the preceding claims, **characterized in that** a group of processing devices (4) is swung on a shaft directed essentially upwards, from the operating position in forward direction, to arrive at the transport position, with the third swivel shaft (25) oriented in the direction of travel being moved into a position in the vicinity of the first shaft (23) oriented in the direction of travel A.

## Patentansprüche

1. Zettwender zum Zetten von am Boden liegendem Erntegut, wie z. B. Heu, wobei der Zettwender zwei einzelne Zetteinheiten umfaßt, wobei die eine Einheit an die frontseitige Anhängevorrichtung, die andere an die heckseitige Anhängevorrichtung eines Schleppers anschließbar ist, wobei die Einheiten an Rahmenteilen eines Rahmens angebracht sind, die in an einen Schlepper angeschlossenem Zustand von einer Arbeitslage in eine Transportlage nach oben geschwenkt werden können, wobei die Zetteinheiten mit antreibbaren drehbaren Bearbeitungsgeräten (4) versehen sind, die Zinken (6) aufweisen, wobei die Maschine einen mit zwei Gruppen von Bearbeitungsgeräten (4) versehenen Rahmen (2) umfaßt, wobei die Bearbeitungsgeräte (4) jeder Gruppe hinsichtlich ihrer Arbeitsweise miteinander verbunden sind, wobei dieser Rahmen (2) zum Anschluß an eine frontseitige Anschlußvorrichtung eines Schleppers bestimmt ist, und wobei die Maschine einen weiteren Rahmen (3) umfaßt, der zum Anschluß an die heckseitige Anschlußvorrichtung desselben Schleppers bestimmt ist, wobei dieser weitere Rahmen (3) mindestens eine Gruppe von Bearbeitungsgeräten (4) umfaßt, die hinsichtlich ihrer Arbeitsweise mit den zu dem anderen Rahmen (2) gehörenden Gruppen von Bearbeitungsgeräten (4) verbunden ist, so daß auf dem Boden liegendes Erntegut über die gesamte Arbeitsbreite gezettet wird.

2. Zettwender nach Anspruch 1,
**dadurch gekennzeichnet, daß** eine Gruppe von Bearbeitungsgeräten (4) dadurch außer Betrieb zu setzen ist, daß der die Bearbeitungsgeräte (4) tragende Rahmenteil (13, 16, 21, 22) in eine schräg aufwärts gerichtete Lage gebracht wird.

3. Zettwender nach einem oder mehreren der vorhergehenden Ansprüche,
**dadurch gekennzeichnet, daß** eine Gruppe von Bearbeitungsgeräten (4) jeweils ein oder mehrere Paare umfaßt.

4. Zettwender nach einem oder mehreren der vorhergehenden Ansprüche,
**dadurch gekennzeichnet, daß** die Maschine eine Arbeitsbreite von etwa 14 m hat.

5. Zettwender nach einem oder mehreren der vorhergehenden Ansprüche,
**dadurch gekennzeichnet, daß** die Maschine Bearbeitungsgeräte (4) umfaßt, von denen mindestens eines zum Zwecke des Transports über Kopf zu drehen ist.

6. Zettwender nach einem oder mehreren der vorhergehenden Ansprüche,
**dadurch gekennzeichnet, daß** ein Bearbeitungsgerät (4) acht Zinkenarme (7) aufweist.

7. Zettwender nach einem oder mehreren der vorhergehenden Ansprüche,
**dadurch gekennzeichnet, daß** die gesamte Arbeitsbreite 14 m und bei Außerbetriebsetzung von zwei Gruppen von Bearbeitungsgeräten (4) 8 m beträgt.

8. Zettwender nach einem oder mehreren der vorhergehenden Ansprüche,
**dadurch gekennzeichnet, daß** der andere Rahmen (2) dadurch in eine Transportlage gebracht wird, daß ein oder mehrere Rahmenteile (16) nahe einem äußeren Rahmenende, sodann ein oder mehrere mittlere Rahmenteile (16) und schließlich der Rahmenteil (13) angehoben wird, der an den mit einem Anbaubock versehenen Rahmenteil (12) angrenzt.

9. Zettwender nach einem oder mehreren der vorhergehenden Ansprüche,
**dadurch gekennzeichnet, daß** ein Bearbeitungsgerät (4) zur Einstellung in die Transportlage um eine vertikale Achse (26) und eine horizontale Achse (25) schwenkbar ist.

10. Zettwender nach einem oder mehreren der vorhergehenden Ansprüche,
**dadurch gekennzeichnet, daß** auf mindestens einer Seite der vertikalen Ebene durch die Längsmittelachse M der vordere Rahmen (2) mindestens drei in Arbeitsrichtung A liegende Schwenkachsen (23 bis 25) aufweist, wobei die von der Längsmittelachse M aus dritte Schwenkachse in der Nähe einer im wesentlichen aufwärts gerichteten Schwenkachse (26) liegt.

11. Zettwender nach Anspruch 10,
**dadurch gekennzeichnet, daß** die im wesentlichen aufwärts gerichtete Schwenkachse (26) innerhalb des größten Umlaufkreises eines von der Längsmittelachse M der Maschine aus ersten Bearbeitungsgerätes (4) angeordnet ist.

12. Zettwender nach einem oder mehreren der vorhergehenden Ansprüche,
**dadurch gekennzeichnet, daß** eine Gruppe von Bearbeitungsgeräten (4) um eine im wesentlichen aufwärts gerichtete Achse aus der Arbeitslage nach vorn in die Transportlage geschwenkt wird, wobei die in Arbeitsrichtung liegende dritte Schwenkachse (25) in eine Position nahe der in Arbeitsrichtung A liegenden ersten Achse (23) bewegt wird.

## Revendications

1. Machine de fanage pour faner une récolte jonchant le sol, du foin par exemple, laquelle machine de fanage comprend deux unités de fanage individuelles, une unité pouvant être fixée au mécanisme d'attelage avant, l'autre unité pouvant être fixée au mécanisme d'attelage arrière d'un tracteur, lesquelles unités sont fixées à des parties de châssis d'un châssis qui peuvent pivoter vers le haut entre une position de fonctionnement et une position de transport dans le cas d'un tracteur, les unités de fanage étant munies de dispositifs de traitement rotatifs entraînables (4) munis de dents (6), moyennant quoi la machine comprend un châssis (2) muni de deux groupes de dispositifs de traitement (4), moyennant quoi, en termes de fonctionnement, les dispositifs de traitement (4) de chaque groupe sont liés entre eux, ce châssis (2) ayant pour but d'assurer la liaison avec un mécanisme d'attelage avant d'un tracteur, et moyennant quoi la machine comprend un châssis supplémentaire (3) ayant pour but d'assurer la liaison avec un mécanisme d'attelage arrière du même tracteur, ce châssis supplémentaire (3) comprenant au moins un groupe de dispositifs de traitement (4) qui, en termes de fonctionnement, sont liés aux groupes de dispositifs de traitement (4) appartenant à l'autre châssis (2), de sorte que sur la largeur de travail totale, la récolte jonchant le sol est fanée.

2. Machine à faner selon la revendication 1, **caractérisée en ce qu'**un groupe de dispositifs de traitement (4) peut être mis hors de fonctionnement en positionnant la partie de châssis (13, 16, 21, 22) supportant les dispositifs de traitement (4) dans une position obliquement verticale.

3. Machine à faner selon l'une ou plusieurs des revendications précédentes, **caractérisé en ce qu'**un groupe de dispositifs de traitement (4) comprend une ou plusieurs paires dans chaque cas.

4. Machine de fanage selon l'une ou plusieurs des revendications précédentes, **caractérisée en ce que** la machine possède une largeur de travail d'environ 14 m.

5. Machine de fanage selon l'une ou plusieurs des revendications précédentes, **caractérisée en ce que** la machine comprend des dispositifs de traitement (4), l'un d'entre eux au moins pouvant être positionné à l'envers en vue d'être transporté.

6. Machine de fanage selon l'une ou plusieurs des revendications précédentes, **caractérisée en ce qu'**un dispositif de traitement (4) possède huit bras dentés (7).

7. Machine de fanage selon l'une ou plusieurs des revendications précédentes, **caractérisée en ce que** la largeur de travail totale atteint 14 m, et 8 m lorsque deux groupes de dispositifs de traitement (4) sont mis hors de prise.

8. Machine de fanage selon l'une ou plusieurs des revendications précédentes, **caractérisée en ce que** l'autre châssis (2) est mis dans une position de transport en élevant une ou plusieurs parties de châssis (16) proches d'une extrémité de châssis extérieure, puis une ou plusieurs parties de châssis médianes (16), et enfin la partie de châssis (13) adjacente à la partie de châssis (12) munie d'un chevalet de fixation.

9. Machine de fanage selon l'une ou plusieurs des revendications précédentes, **caractérisée en ce qu'**un dispositif de traitement (4) peut être balancé sur un axe vertical (26) et horizontal (25) pour parvenir à une position de transport.

10. Machine de fanage selon l'une ou plusieurs des revendications précédentes, **caractérisée en ce que** sur au moins un côté du plan vertical au travers de l'axe M, le châssis avant (2) comprend au moins trois pivots (23 à 25) orientés dans la direction de déplacement A, le troisième, à partir de l'axe M, se trouvant au voisinage d'un axe de pivotement (26) dirigé essentiellement vers le haut.

11. Machine de fanage selon la revendication 10, **caractérisée en ce que** l'arbre de pivotement (26) dirigé essentiellement vers le haut est disposé à l'intérieur du cercle de plus grande circonférence d'un premier dispositif de traitement (4), à partir de l'axe M de la machine.

12. Machine de fanage selon l'une ou plusieurs des revendications précédentes, **caractérisée en ce qu'**un groupe de dispositifs de traitement (4) est oscillé sur un arbre dirigé essentiellement vers le haut, à partir de la position de fonctionnement dans une direction avant, pour parvenir à la position de transport, le troisième arbre de pivotement (25) orienté dans la direction de déplacement étant déplacé dans une position voisine du premier arbre (23) orienté dans la direction de déplacement A.
